# EUROPÄISCHE PATENTANMELDUNG

(11) **EP 4 663 303 A1**
(43) Veröffentlichungstag der Anmeldung: **17.12.2025**
(21) Anmeldenummer: 25181817.5
(22) Anmeldetag: 10.06.2025
(51) Int. Cl.: B02C 18/18, B02C 18/14, A01B 33/10, A01G 23/06

(54) **SCHNEIDWERKZEUG UND SCHNEIDSYSTEM FÜR EINEN ZERKLEINERUNGSROTOR**

(30) Priorität: 13.06.2024 DE 102024116586
(71) Anmelder: PRINOTH GmbH, 88634 Herdwangen (DE)
(72) Erfinder: Braun, Daniel, 78315 Radolfzell (DE); Hosti, Markus, 78333 Stockach (DE); Möhrle, Andreas, 88634 Herdwangen (DE)
(74) Vertreter: Daub, Thomas

(57) **Zusammenfassung**

Die Erfindung geht aus von einem Schneidwerkzeug für einen Zerkleinerungsrotor (12), insbesondere zur Holz- und/oder Erdreichzerkleinerung, mit wenigstens einer Schneide (22), und wenigstens einem Befestigungsbereich (36), der vorzugsweise zumindest teilweise als eine Befestigungsvertiefung ausgebildet ist, die in einer Längserstreckung zwei Teilbereiche (38, 40) aufweist, die winklig zueinander ausgerichtet sind.

Es wird vorgeschlagen, dass die Teilbereiche (38, 40) einen Winkel (A) einschließen, der größer ist als 90 Grad.

## Beschreibung

### Stand der Technik

Die Erfindung betrifft ein Schneidwerkzeug nach dem Oberbegriff des Patentanspruchs 1 und ein Schneidsystem nach dem Anspruch 14.

Die Druckschrift EP 2 852 464 A1 offenbart ein Schneidwerkzeug für einen Zerkleinerungsrotor, insbesondere zur Holz- und/oder Erdreichzerkleinerung, mit wenigstens einer Schneide, und wenigstens einen Befestigungsbereich, der in einer Längserstreckung zwei Teilbereiche aufweist, die winklig zueinander ausgerichtet sind.

Die Aufgabe der Erfindung besteht insbesondere darin, ein gattungsgemäßes Schneidwerkzeug mit verbesserten Eigenschaften hinsichtlich einer Festigkeit, einer einfachen Montage und einer betriebssicheren Montage bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Schneidwerkzeug für einen Zerkleinerungsrotor, insbesondere zur Holz- und/oder Erdreichzerkleinerung, mit wenigstens einer Schneide, und wenigstens einem Befestigungsbereich, der vorzugsweise zumindest teilweise als eine Befestigungsvertiefung ausgebildet ist, die in einer Längserstreckung zwei Teilbereiche aufweist, die winklig zueinander ausgerichtet sind.

Es wird vorgeschlagen, dass die Teilbereiche einen Winkel A einschließen, der größer ist als 90 Grad. Unter einem "Schneidwerkzeug" soll insbesondere eine Einheit verstanden werden, welche dazu vorgesehen ist, Material, insbesondere Holz und/oder Erdreich, insbesondere auch Gestein, zu zerkleinern, insbesondere zu zerschneiden und/oder zu zerhacken und/oder zu zertrümmern. Insbesondere ist das Schneidwerkzeug dazu vorgesehen, an einem Basiselement eines Schneidsystems, das an dem Zerkleinerungsrotor angebunden ist, befestigt zu werden. Vorzugsweise ist das Schneidwerkzeug wechselbar an dem Basiselement befestigbar. Vorzugsweise ist das Schneidwerkzeug über eine vorzugsweise zerstörungsfrei lösbare Verbindung an einem Basiselement montierbar. Vorzugsweise ist das Schneidwerkzeug mittels einer Schraubverbindung an dem Basiselement anbindbar. Unter einem "Schneidwerkzeug" soll vorzugsweise eine Einheit verstanden werden, die zumindest eine Schneide aufweist. Das Schneidwerkzeug nimmt in einem Betriebszustand auf die Schneide wirkende Kräfte auf und/oder leitet diese ab. Vorzugsweise kann das Schneidwerkzeug von einem Grundkörper ausgebildet sein, der eine Schneidaufnahme aufweist, in der eine Schneide, beispielsweise eine gehärtete Schneide, insbesondere eine Schneide aus einem Hartmetall angebunden ist. Vorzugsweise ist eine Schneide durch eine Lötverbindung an eine Schneidaufnahme des Grundkörpers des Schneidwerkzeugs angebunden. Grundsätzlich wäre es auch denkbar, dass die Schneide durch eine Schweißverbindung an die Schneidaufnahme des Grundkörpers fest angebunden ist. Grundsätzlich ist es auch denkbar, dass die Schneide mittels einer anderen Verbindungsmethode mit dem Grundkörper verbunden ist. Grundsätzlich ist es auch denkbar, dass die Schneide integral mit einem Grundkörper des Schneidwerkzeugs ausgebildet ist. Bei einer integralen Ausbildung der Schneide mit dem Grundkörper des Schneidwerkzeugs ist das gesamte Schneidwerkzeug integral aus einem einzelnen Bauteil gebildet, vorzugsweise als ein Schmiedeteil. Unter einem "Zerkleinerungsrotor" soll vorzugsweise ein Rotationskörper verstanden werden, an dessen Mantelfläche vorzugsweise eine Vielzahl an Basiselementen angebunden sind, über die jeweils ein Schneidwerkzeug anbindbar ist. Unter einem "Zerkleinerungsrotor" soll vorzugsweise ein Rotationskörper verstanden werden, welcher dazu vorgesehen ist, zur Durchführung eines Zerkleinerungsvorgangs mit wenigstens einem Schneidwerkzeug bestückt zu werden. In einem Betriebszustand rotiert der Zerkleinerungsrotor um seine Längsachse, wodurch das Schneidwerkzeug mit dem zu zerkleinernden Material in Kontakt gebracht wird. Unter einer "Längsachse" des Zerkleinerungsrotors soll insbesondere eine Rotationssymmetrieachse eines geometrischen Zylinders kleinsten Volumens verstanden werden, welcher den Zerkleinerungsrotor gerade noch umschließt. Der Zerkleinerungsrotor umfasst insbesondere einen Grundkörper, welcher vorzugsweise rotationssymmetrisch ausgebildet ist und an welchem wenigstens ein Basiselement befestigt ist, vorzugsweise drehfest. Besonders vorteilhaft ist der Grundkörper zumindest teilweise als ein Rundrohr ausgebildet. Das Basiselement kann dabei auf beliebige, dem Fachmann als sinnvoll erscheinende Weise am Grundkörper befestigt sein, insbesondere durch eine Schraubverbindung und vorzugsweise durch eine einstückige Ausgestaltung. Vorzugsweise ist das Basiselement mit dem Grundkörper verschweißt. Unter einem "Befestigungsbereich" soll vorzugsweise ein Bereich verstanden werden, über den das Schneidwerkzeug an einem korrespondierend ausgebildeten Basisbauteil befestigbar ist. Der Befestigungsbereich bildet eine Anlagefläche aus, mit der das Schneidwerkzeug an einem korrespondierend ausgebildeten Befestigungsbereich des Basisbauteils anliegt. Vorzugsweise ist der Befestigungsbereich zumindest teilweise, also zumindest in einem Bereich als eine Befestigungsvertiefung ausgebildet. Vorzugsweise ist der Befestigungsbereich zumindest in einem der beiden Teilbereiche zumindest abschnittsweise, vorzugsweise vollständig als eine Befestigungsvertiefung ausgebildet. Besonders bevorzugt ist der Befestigungsbereich in beiden Teilbereichen zumindest abschnittsweise, vorzugsweise vollständig als eine Befestigungsvertiefung ausgebildet. Grundsätzlich wäre es auch denkbar, dass der Befestigungsbereich in einem der Teilbereiche, beispielsweise dem ersten Teilbereich als eine Befestigungsvertiefung ausgebildet ist und in dem anderen Teilbereich, also beispielsweise dem zweiten Teilbereich als eine ebene Fläche. Unter einer "Befestigungsvertiefung" soll vorzugsweise eine Vertiefung verstanden werden, die zumindest in eine Seite des Schneidwerkzeugs eingebracht ist und die zur Positionierung und Fixierung des Schneidwerkzeugs an einem korrespondierend ausgebildeten Basisbauteil vorgesehen ist. Unter einer "Längserstreckung" soll vorzugsweise eine Erstreckung des Schneidwerkzeugs von einem oberen Ende zu einem unteren Ende verstanden werden. Unter "winklig zueinander" soll vorzugsweise verstanden werden, dass eine Längserstreckungsachse der beiden Teilbereiche in einem Winkel A zueinander angeordnet und nicht parallel zueinander ausgerichtet sind. Die Winkel zwischen zwei Teilbereichen werden vorzugsweise zwischen zwei Haupterstreckungsebenen der jeweiligen Teilbereiche gemessen. Weisen die Teilbereiche jeweils einen ebenen Boden auf, kann der Winkel zwischen den Teilbereichen vorzugsweise zwischen den jeweiligen Böden, die beispielsweise von Nuten gebildet sind, gemessen werden.

Das Schneidwerkzeug und vorzugsweise auch das Basiselement sind vorzugsweise als Schmiedeteile ausgebildet. Schmiedeteile, die in einem Schmiedeprozess hergestellt werden, weisen Toleranzen auf, die insbesondere bezüglich Winkelangaben berücksichtigt werden müssen. Die zuvor und im Folgenden angegebenen Winkel sind immer als konstruierte Winkel zu verstehen, mit denen das Schneidwerkzeug und/oder das Basiselement konstruiert wurden. Durch die entsprechenden Toleranzen kann ein Winkel bei einem entsprechend hergestellten Bauteil um bis zu 2 Grad abweichen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Schneidwerkzeug bereitgestellt werden, das besonders robust ist und besonders einfach an ein Basiselement montierbar ist. Besonders bevorzugt können auf das Schneidwerkzeug in einem Betrieb wirkende Kräfte besonders gut in das Basiselement abgeleitet werden. Durch die erfindungsgemäße Ausgestaltung kann insbesondere langlebiges Schneidwerkzeug bereitgestellt werden. Insbesondere kann auch eine einfache Montage und Demontage durch das erfindungsgemäße Schneidwerkzeug erreicht werden.

Weiter wird vorgeschlagen, dass die Teilbereiche einen Winkel A von 95 Grad bis 120 Grad, vorzugsweise von 100 Grad bis 115 Grad miteinander einschließen. Besonders vorteilhaft schließen die beiden Teilbereiche des Befestigungsbereichs einen Winkel von 110 Grad miteinander ein. Dadurch kann der Befestigungsbereich besonders vorteilhaft ausgestaltet werden, um eine besonders vorteilhafte Abstützung von in einem Betrieb auftretenden Kräften zu erreichen.

Ferner wird vorgeschlagen, dass das Schneidwerkzeug eine Befestigungslochlängsachse aufweist, wobei der erste Teilbereich einen Winkel B mit der Befestigungslochlängsachse einschließt, der sich von einem Winkel C unterscheidet, den die Befestigungslochlängsachse mit dem zweiten Teilbereich einschließt. Unter einer "Befestigungslochlängsachse" soll vorzugsweise eine Mittelachse eines Befestigungslochs verstanden werden, das in dem Schneidwerkzeug, insbesondere in den Grundkörper des Schneidwerkzeugs eingebracht ist. Unter einem Befestigungsloch soll vorzugsweise ein Loch verstanden werden, über das das Schneidwerkzeug an einem Basisbauteil positionsfest fixierbar ist. Das Befestigungsloch weist vorzugsweise einen runden Querschnitt auf. Vorzugsweise ist das Befestigungsloch als eine Bohrung ausgebildet. Vorzugsweise ist das Befestigungsloch dazu vorgesehen, dass ein Befestigungsmittel, das zur Fixierung des Schneidwerkzeugs vorgesehen ist, zumindest teilweise hindurchgeführt ist und/oder darin befestigt ist. Vorzugsweise weist das Befestigungsloch ein Innengewinde auf. Vorzugsweise ist das Befestigungsloch, das ein Innengewinde aufweist, dazu vorgesehen, dass ein Befestigungsmittel, beispielsweise eine Schraube, zur Anbindung des Schneidwerkzeugs an ein Basiselement, in das Befestigungsloch eingeschraubt wird. Vorzugsweise ist das in das Schneidwerkzeug eingebrachte Befestigungsloch als ein Sackloch ausgebildet. Grundsätzlich wäre es aber auch denkbar, dass das Befestigungsloch als ein Durchgangsloch ausgebildet ist. Dadurch kann der Befestigungsbereich besonders vorteilhaft ausgebildet werden und eine besonders vorteilhafte Abstützung von Betriebskräften erfolgen. Vorteilhaft kann das Schneidwerkzeug dadurch besonders einfach und kostengünstig ausgebildet werden und eine schnelle und sichere Montage/Demontage des Schneidwerkzeugs erreicht werden. Vorteilhaft kann auch eine sichere Befestigung des Schneidwerkzeugs an einem Basisbauteil erreicht werden.

Es wird weiterhin vorgeschlagen, dass das Schneidwerkzeug eine Befestigungslochlängsachse aufweist, wobei ein erster Teilbereich des Befestigungsbereichs einen Winkel B mit der Befestigungslochlängsachse einschließt, der zwischen 65 Grad und 75 Grad liegt. Vorzugsweise beträgt der Winkel B, den der erste Teilbereich mit der Befestigungslochlängsachse einschließt, zwischen 68 Grad und 72 Grad, und in einem besonders vorteilhaften Ausführungsbeispiel 70 Grad. Dadurch kann der Befestigungsbereich besonders vorteilhaft ausgebildet werden und eine besonders vorteilhafte Abstützung von Betriebskräften erfolgen.

Des Weiteren wird vorgeschlagen, dass das Schneidwerkzeug eine Befestigungslochlängsachse aufweist, wobei der zweite Teilbereich des Befestigungsbereichs einen Winkel C mit der Befestigungslochlängsachse einschließt, der zwischen 35 Grad und 45 Grad liegt. Vorzugsweise beträgt der Winkel C, den der zweite Teilbereich mit der Befestigungslochlängsachse einschließt, zwischen 38 Grad und 42 Grad, und in einem besonders vorteilhaften Ausführungsbeispiel 40 Grad. Dadurch kann der Befestigungsbereich besonders vorteilhaft ausgebildet werden und eine besonders vorteilhafte Abstützung von Betriebskräften erfolgen.

Weiterhin wird vorgeschlagen, dass der erste Teilbereich als ein Hauptabstützbereich ausgebildet ist, der einer größere Erstreckung aufweist als der zweite Teilbereich. Unter einem "Hauptabstützbereich" soll vorzugsweise ein Bereich verstanden werden, über den ein Großteil der in einem Betrieb auf das Schneidwerkzeug wirkenden Betriebskräfte abgestützt werden, insbesondere an ein Basiselement abgeleitet werden können. Dazu ist der als Hauptabstützbereich ausgebildete erste Teilbereich des Befestigungsbereichs vorzugsweise im Wesentlichen orthogonal zu einer Schneidbewegungsrichtung ausgerichtet. Darunter, dass der erste Teilbereich eine größere Erstreckung aufweist, soll verstanden werden, dass der erste Teilbereich eine größere Erstreckung in der Längserstreckung aufweist, als der zweite Teilbereich. Der erste Teilbereich ist in seiner Längsrichtung länger als der zweite Teilbereich. Der zweite Teilbereich ist in seiner Längsrichtung kürzer als der erste Teilbereich. Dadurch kann eine besonders vorteilhafte Abstützungsfläche für Betriebskräfte bereitgestellt werden.

Außerdem wird vorgeschlagen, dass der erste Teilbereich von zumindest einem Teilbereich einer Rückseite des Schneidwerkzeugs ausgebildet ist. Unter einer "Rückseite des Schneidwerkzeugs" soll vorzugsweise eine der Schneide des Schneidwerkzeugs abgewandte Seite verstanden werden. Dadurch kann das Schneidwerkzeug besonders vorteilhaft ausgebildet werden. Ferner kann dadurch eine vorteilhafte Kraftübertragung auf ein Basiselement erreicht werden.

Es wird weiter vorgeschlagen, dass der zweite Teilbereich zumindest von einem Teilbereich einer Unterseite des Schneidwerkzeugs ausgebildet ist. Dadurch kann das Schneidwerkzeug besonders vorteilhaft ausgebildet werden. Vorteilhaft kann dadurch eine besonders einfache und genaue Positionierung des Schneidwerkzeugs an einem Basisbauteil erreicht werden.

Ferner wird vorgeschlagen, dass das Schneidwerkzeug eine Schneidbewegungsrichtung aufweist, wobei ein erster Teilbereich des Befestigungsbereichs einen Winkel D mit der Befestigungslochlängsachse einschließt, der zwischen 79 Grad und 89 Grad liegt.

Vorzugsweise beträgt der Winkel D, den der erste Teilbereich mit der Schneidbewegungsrichtung einschließt, zwischen 82 Grad und 86 Grad, und in einem besonders vorteilhaften Ausführungsbeispiel 84 Grad. Unter einer "Schneidbewegungsrichtung" soll vorzugsweise eine Richtung verstanden werden, in der sich eine Schneide des Schneidwerkzeugs während eines Betriebs bewegt. Vorzugsweise ist die Schneidbewegungsrichtung dabei als eine gerade Bewegungskomponente ausgebildet, in die sich die Schneide zu einem definierten Zeitpunkt durch die Rotation des Zerkleinerungsrotors bewegen würde. Dadurch kann der Befestigungsbereich besonders vorteilhaft ausgebildet werden und eine besonders vorteilhafte Abstützung von Betriebskräften erfolgen.

Es wird weiter vorgeschlagen, dass das Schneidwerkzeug eine Schneidbewegungsrichtung aufweist, wobei der zweite Teilbereich des Befestigungsbereichs einen Winkel E mit der Befestigungslochlängsachse einschließt, der zwischen 9 Grad und 19 Grad liegt. Vorzugsweise beträgt der Winkel E, den der zweite Teilbereich mit der Schneidbewegungsrichtung einschließt, zwischen 24 Grad und 28 Grad, und in einem besonders vorteilhaften Ausführungsbeispiel 14 Grad. Dadurch kann der Befestigungsbereich besonders vorteilhaft ausgebildet werden und eine besonders vorteilhafte Abstützung von Betriebskräften erfolgen.

Zudem wird vorgeschlagen, dass der Befestigungsbereich zumindest teilweise als eine keilförmige Nut ausgebildet ist, die Seitenwandungen aufweist, die in einem Winkel F, G zueinander angeordnet sind, der in einem Bereich von 130 Grad bis 172 Grad liegt. Unter einer "keilförmigen Nut" soll vorzugsweise eine Nut verstanden werden, die von zwei einander zugewandten Seitenwandungen gebildet ist. Die Seitenwandungen sind vorzugsweise als ebene Flächen ausgebildet. Grundsätzlich ist es aber auch denkbar, dass die Seitenwandungen zumindest in Teilbereichen eine konvexe oder konkave Form aufweisen. Beispielsweise wäre es denkbar, dass die Seitenflächen in Teilbereichen ballig ausgebildet sind. Die Seitenwandungen, die eine keilförmige Nut ausbilden, schließen vorzugsweise einen stumpfen Winkel miteinander ein. Vorzugsweise weist der als keilförmige Nut ausgebildete Befestigungsbereich einen als Steg ausgebildeten Nutgrund auf, durch den die beiden schräg verlaufenden Seitenwandungen an einem unteren Ende des Befestigungsbereichs zueinander beabstandet angeordnet sind. Grundsätzlich wäre es aber auch denkbar, dass der als keilförmige Nut ausgebildete Befestigungsbereich keinen als Steg ausgebildeten Nutgrund aufweist, sondern die Seitenwandungen an dem Nutgrund direkt aufeinandertreffen. Darunter, dass der als Befestigungsvertiefung ausgebildete Befestigungsbereich "zumindest teilweise als eine keilförmige Nut ausgebildet ist" soll verstanden werden, dass der Befestigungsbereich lediglich in zumindest einem Bereich Seitenwandungen aufweisen kann, die eine keilförmige Nut ausbilden. Vorzugsweise ist der Befestigungsbereich über seine gesamte Längserstreckung als eine keilförmige Nut ausgebildet. Grundsätzlich wäre es aber auch denkbar, dass der als Befestigungsvertiefung ausgebildete Befestigungsbereich lediglich in einem Teilbereich schräge Seitenwandungen aufweist und als eine keilförmige Nut ausgebildet ist, während er in einem restlichen Bereich eine andere Form aufweist. Es wäre denkbar, dass der Befestigungsbereich in weniger als 50% seiner Längserstreckung als eine keilförmige Nut ausgebildet ist. Grundsätzlich wäre es auch denkbar, dass der Befestigungsbereich in mehreren voneinander beabstandeten Bereichen als eine keilförmige Nut ausgebildet ist. Der Befestigungsbereich ist vorzugsweise in dem ersten Teilbereich und in dem zweiten Teilbereich zumindest teilweise als eine keilförmige Nut ausgebildet. In dem ersten Teilbereich weist der Befestigungsbereich Seitenwandungen auf, die die keilförmige Nut ausbilden, die in einem Winkel F miteinander einschließen, der zwischen 130 Grad und 140 Grad, besonders bevorzugt zwischen 133 Grad und 137 Grad liegt, und in einer besonders vorteilhaften Ausgestaltung 135 Grad beträgt. In dem zweiten Teilbereich weist der Befestigungsbereich Seitenwandungen auf, die die keilförmige Nut ausbilden, die in einem Winkel G miteinander einschließen, der zwischen 162 Grad und 172 Grad, besonders bevorzugt zwischen 165 Grad und 169 Grad liegt, und in einer besonders vorteilhaften Ausgestaltung 167,5 Grad beträgt. Vorzugsweise ist der Befestigungsbereich in dem ersten Teilbereich und in dem zweiten Teilbereich als keilförmige Nut ausgebildet. Grundsätzlich wäre es aber auch denkbar, dass der Befestigungsbereich lediglich in einem der Teilbereiche, insbesondere in dem ersten Teilbereich als eine keilförmige Nut ausgebildet ist und in dem zweiten Teilbereich eine ebene Anlagefläche oder eine Anlageerhebung ausbildet. Dadurch kann der Befestigungsbereich besonders vorteilhaft ausgebildet werden, um in einem befestigten Zustand in einer Querrichtung einen besonders vorteilhaften Halt zu haben.

Weiter wird vorgeschlagen, dass der Befestigungsbereich in seinen zwei Teilbereichen jeweils zumindest teilweise als eine keilförmige Nut ausgebildet ist, wobei Seitenwandungen der keilförmigen Nuten in den beiden Teilbereichen unterschiedliche Winkel F, G zueinander aufweisen. Vorzugsweise unterscheiden sich die Winkel F, G, in denen die Seitenwandungen der keilförmigen Nuten in den zwei Teilbereichen jeweils zueinander angeordnet sind, vorzugsweise um zumindest 10 Grad, vorzugsweise um zumindest 20 Grad und besonders bevorzugt um mehr als 30 Grad. Dadurch kann eine besonders vorteilhafte Abstützung der Betriebskräfte über die unterschiedlichen Teilbereiche stattfinden.

Ferner wird vorgeschlagen, dass das Schneidwerkzeug ein Befestigungsloch aufweist, das sich von einer Rückseite in das Schneidwerkzeug erstreckt und das zur Befestigung eines Befestigungsmittels vorgesehen ist. Unter einer "Rückseite" soll eine der Schneide abgewandte Seite des Schneidwerkzeugs, insbesondere des Grundkörpers des Schneidwerkzeugs verstanden werden. Dadurch kann das Schneidwerkzeug besonders vorteilhaft für eine einfache und sichere Anbindung an ein Basiselement ausgebildet werden.

Es wird weiterhin vorgeschlagen, dass das Befestigungsloch als ein Sackloch mit einem Innengewinde ausgebildet ist. Dadurch kann das Befestigungsloch besonders vorteilhaft zur einfachen Anbindung des Schneidwerkzeugs mittels eines als Schraube ausgebildeten Befestigungsmittels ausgebildet werden.

Weiterhin wird vorgeschlagen, dass das Schneidwerkzeug zumindest eine Schneide aufweist, die an einem oberen Ende auf einer Vorderseite des Schneidwerkzeugs angeordnet ist. Vorzugsweise kann die Schneide integral mit einem Grundkörper des Schneidwerkzeugs ausgebildet sein, oder als eine separate Schneide, insbesondere eine Hartmetallschneide, die in einer Schneidaufnahme des Grundkörpers starr, vorzugsweise über eine Lötverbindung stoffschlüssig angebunden ist. Dadurch kann das Schneidwerkzeug besonders vorteilhaft ausgebildet werden.

Außerdem wird ein Schneidsystem mit einem Schneidwerkzeug vorgeschlagen, wobei das Schneidsystem ein Basiselement aufweist, das zur starren Anbindung an den Zerkleinerungsrotor vorgesehen ist, und das an einer Vorderseite einen Anlagebereich aufweist, der dazu vorgesehen ist, dass das Schneidwerkzeug mit seinem Befestigungsbereich zumindest teilweise formschlüssig anliegt. Unter einem "Schneidsystem" soll vorzugsweise ein System aus zumindest einem Basiselement und einem daran befestigbaren Schneidwerkzeug verstanden werden. Unter einem "Basiselement" soll vorzugsweise ein fest und starr mit einem Zerkleinerungsrotor verbundenes Element verstanden werden, das zur zerstörungsfrei lösbaren Verbindung mit einem Schneidwerkzeug vorgesehen ist. Vorzugsweise kann ein Schneidwerkzeug über eine Schraubverbindung mittels einer Schraube zerstörungsfrei lösbar an dem Basiselement befestigt werden. Das Basiselement ist vorzugsweise dazu vorgesehen stoffschlüssig, durch eine Schweißverbindung starr mit dem Zerkleinerungsrotor verbunden zu werden. Unter einem "Anlagebereich" soll vorzugsweise ein Bereich verstanden werden, an dem ein Schneidwerkzeug mit seinem Befestigungsbereich, der vorzugsweise als Befestigungsvertiefung ausgebildet ist, zumindest teilweise anliegt und über die Kräfte, insbesondere Betriebskräfte von dem Schneidwerkzeug in das Basiselement abgeleitet werden. Der Anlagebereich ist korrespondierend zu dem Befestigungsbereich ausgebildet. Vorzugsweise liegt das Schneidwerkzeug über einen Großteil seines Befestigungsbereichs, oder über die gesamte Längserstreckung des Befestigungsbereichs an dem Anlagebereich an. Grundsätzlich ist es auch denkbar, dass das Schneidwerkzeug lediglich in Teilbereichen, die weniger als 50% der Längserstreckung des Befestigungsbereichs ausmachen, an dem Anlagebereich anliegt. Vorzugsweise liegt das Schneidwerkzeug mit seinen Seitenwandungen des Befestigungsbereichs, die die keilförmige Nut ausbilden, an dem Anlagebereich an. Die Seitenwandungen des Befestigungsbereichs des Schneidwerkzeugs liegen vorzugsweise eben auf entsprechend ausgebildeten Flächen des Anlagebereichs auf. Vorzugsweise weist der Anlagebereich Seitenflächen auf, die eine keilförmige Erhebung ausbilden und so korrespondierend zu dem als keilförmige Nut ausgebildeten Befestigungsbereich ausgebildet sind. Vorzugsweise ist es auch denkbar, dass in einem montierten Zustand lediglich Teilbereiche der Seitenwandungen des Befestigungsbereichs, die eine keilförmige Nut ausbilden, an den Seitenflächen des Anbindungsbereichs anliegen. Dadurch kann vorteilhaft ein System bereitgestellt werden, mit dem Schneidwerkzeuge besonders einfach und sicher über ein Basisbauteil an einen Zerkleinerungsrotor angebracht werden können.

Es wird weiter vorgeschlagen, dass der Anlagebereich einen ersten Teilbereich aufweist, der korrespondierend zu dem ersten Teilbereich des Schneidwerkzeugs ausgebildet ist, und einen zweiten Teilbereich, der korrespondierend zu dem ersten Teilbereich des Schneidwerkzeugs ausgebildet ist, aufweist. Darunter, dass die Teilbereiche korrespondierend ausgebildet sind soll verstanden werden, dass Bereiche, insbesondere die jeweiligen Seitenwandungen des Befestigungsbereichs des Schneidwerkzeugs und die Seitenflächen des Anlagebereichs des Basiselements, jeweils so ausgebildet sind, dass sie in einem korrekt montierten Zustand im Wesentlichen plan aufeinander aufliegen. Vorzugsweise weisen die Seitenwandungen des Befestigungsbereichs des Schneidwerkzeugs und die Seitenflächen des Anlagebereichs des Basiselements zu einer Mittellängsebene jeweils eine gleiche Neigung auf. Vorzugsweise kann es vorgesehen sein, dass in zumindest einem Teilbereich die Seitenwandungen des Befestigungsbereichs des Schneidwerkzeugs und die Seitenflächen des Anlagebereichs des Basiselements um 0,5 Grad bis 1,5 Grad unterschiedliche Neigungen aufweisen, sodass sich die Seitenwandungen des Befestigungsbereichs und die Seitenflächen des Anlagebereichs in einem montierten Zustand gegeneinander verspannen, um eine besonders feste und stabile Verbindung zwischen dem Schneidwerkzeug und dem Basiselement zu erreichen. Dadurch kann das Schneidwerkzeug besonders einfach und sicher über den Anlagebereich mit dem Basiselement verbunden werden.

Weiter wird vorgeschlagen, dass der Anlagebereich einen zweiten Teilbereich aufweist, der zumindest teilweise eine keilförmige Erhebung ausbildet, wobei die Seitenflächen der keilförmigen Erhebungen einen Winkel I aufweisen, der minimal größer, vorzugsweise zwischen 0,1 Grad und 3,5 Grad größer, ist als der Winkel B des zweiten Teilbereichs des Schneidwerkzeugs. Vorzugsweise ist der Winkel I, den die Seitenflächen der keilförmigen Erhebung in dem zweiten Teilbereich einschließen, zwischen 0,5 Grad und 1,5 Grad größer und in einem besonders bevorzugten Ausführungsbeispiel 1 Grad. Dadurch kann das Schneidwerkzeug bei einer Verbindung mit dem Basiselement besonders vorteilhaft verspannt werden, um so eine besonders sichere und feste Montage des Schneidwerkzeugs an dem Basiselement zu gewährleisten.

Ferner wird vorgeschlagen, dass der zweite Teilbereich des Anlagebereichs eine Erstreckung aufweist, die kleiner ist als eine Dicke des Schneidwerkzeugs an seinem unteren Ende. Dadurch liegt das Schneidwerkzeug mit seiner Unterseite, die den zweiten Teilbereich des Befestigungsbereichs ausbildet, lediglich teilweise auf dem Basiselement, also auf dem zweiten Teilbereich des Anlagebereichs auf. Dadurch kann das Basisbauteil besonders vorteilhaft ausgebildet werden.

Es wird weiterhin vorgeschlagen, dass das Schneidwerkzeug in einem an dem Basiselement montierten Zustand, mit seiner Unterseite über den zweiten Teilbereich des Anlagebereichs des Basisbauteils übersteht. Vorzugsweise ist der Bereich der Unterseite des Schneidwerkzeugs, das über den Anlagebereich des Basisbauteils hinausragt, nicht mehr Teil des zweiten Teilbereichs der Befestigungsausnehmung des Schneidwerkzeugs. Dadurch kann das Basiselement in seinem vorderen Bereich in einem Betrieb besonders vorteilhaft durch das Schneidwerkzeug überdeckt und dadurch geschützt werden. Vorteilhaft kann dadurch ein besonders guter Verschleißschutz für das Schneidwerkzeug erreicht werden.

Des Weiteren wird vorgeschlagen, dass das Basiselement das Schneidwerkzeug nicht umgreift. Dadurch kann eine besonders einfache Montage und Demontage des Schneidwerkzeugs an dem Basiselement erreicht werden.

Das erfindungsgemäße Schneidwerkzeug soll hierbei nicht auf die oben beschriebene Anwendung und Ausführungsform beschränkt sein. Insbesondere kann das erfindungsgemäße Schneidwerkzeug zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Zerkleinerungsrotors, mit einem erfindungsgemäßen Schneidsystem mit mehreren Basiselementen und daran befestigten Schneidwerkzeugen,
- Fig. 2: eine schematische Ansicht eines Schneidsystems mit einem Basiselement und dem daran befestigten, insbesondere verschraubten Schneidwerkzeug,
- Fig. 3: eine Schnittansicht durch eine Mittelebene des Schneidwerkzeugs und des Basiselements,
- Fig. 4: eine schematische Seitenansicht des erfindungsgemäßen Schneidwerkzeugs,
- Fig. 5: eine schematische Rückansicht auf das erfindungsgemäße Schneidwerkzeug mit einer Befestigungsausnehmung mit zwei Teilbereichen, wobei ein Winkel G des zweiten Teilbereichs angezogen ist,
- Fig. 6: eine schematische Ansicht von Unten auf das erfindungsgemäße Schneidwerkzeug mit der Befestigungsausnehmung mit den zwei Teilbereichen, wobei ein Winkel F des ersten Teilbereichs angezogen ist,
- Fig. 7: eine schematische Seitenansicht des erfindungsgemäßen Basiselements des Schneidsystems,
- Fig. 8: eine schematische Draufsicht auf das Basiselement mit seinem Aufnahmebereich zur Anbindung eines Schneidwerkzeugs,
- Fig. 9: eine schematische Ansicht von unten auf das Basiselement mit seinem Aufnahmebereich zur Anbindung eines Schneidwerkzeugs und
- Fig. 10: eine schematische Darstellung eines Schneidwerkzeugs in einem zweiten Ausführungsbeispiel, das eine integral mit einem Grundkörper ausgebildete Schneide aufweist.

### Beschreibung der Ausführungsbeispiele

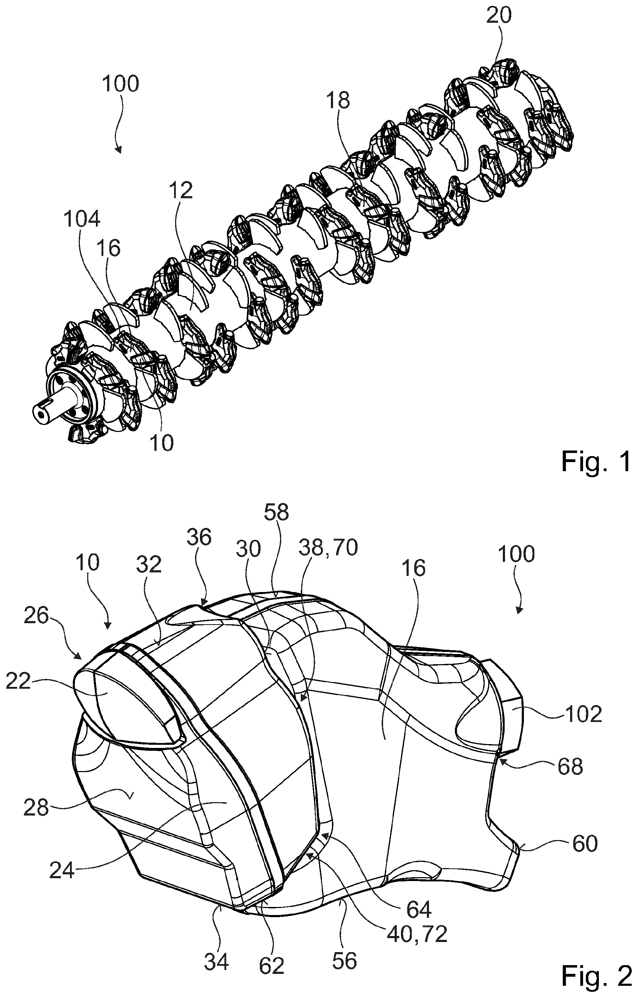

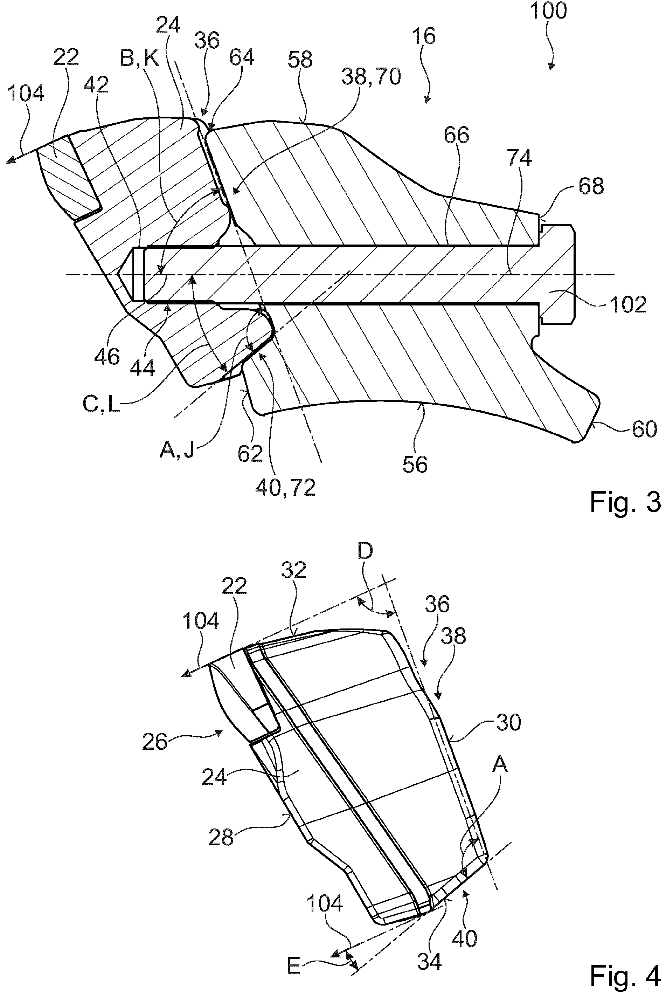

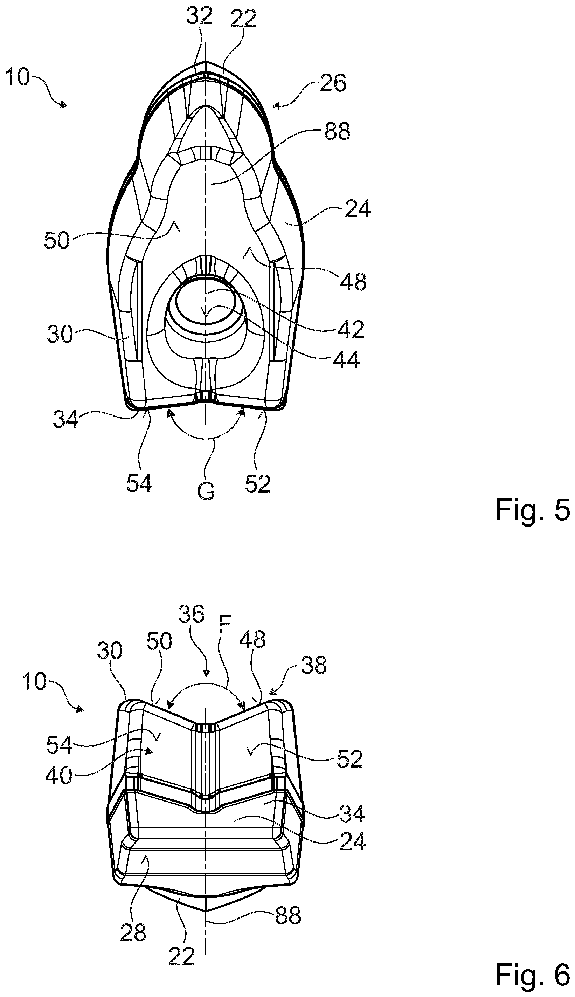

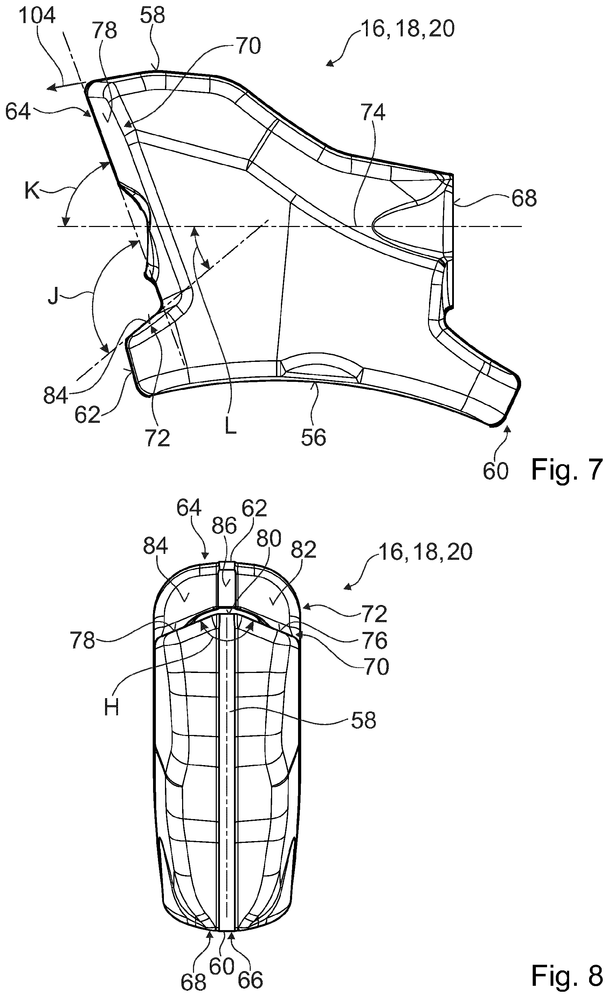

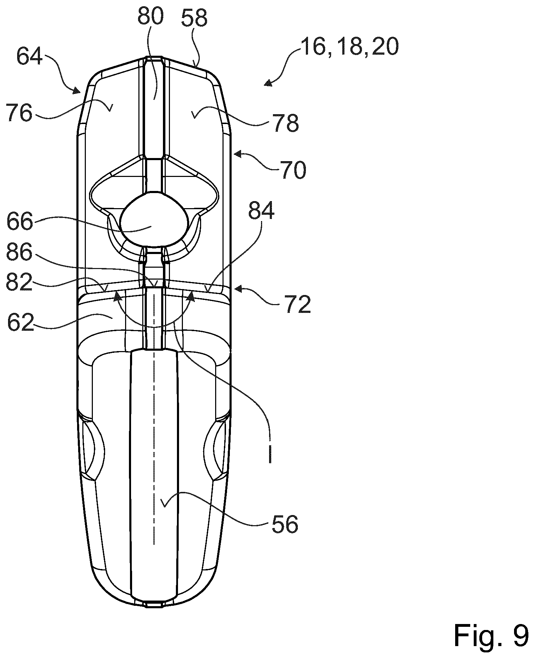

Die Figuren 1 bis 9 zeigen ein erstes Ausführungsbeispiel eines erfindungsgemäßen Schneidwerkzeugs 10 eines erfindungsgemäßen Schneidsystems 100. In der Figur 1 ist ein erfindungsgemäßer Zerkleinerungsrotor 12 gezeigt, der ein erfindungsgemäßes Schneidsystem 100 mit mehreren erfindungsgemäßen Schneidwerkzeugen 10 aufweist. Derartige Zerkleinerungsrotoren 12 kommen insbesondere in Anbauwerkzeugen für Nutzfahrzeuge zum Einsatz, insbesondere zum Mulchen und/oder Schreddern. Der Zerkleinerungsrotor 12 ist zu einer Holz- und/oder Erdreichzerkleinerung vorgesehen. Der Zerkleinerungsrotor 12 umfasst einen Grundkörper 14. Der Grundkörper 14 ist walzenförmig ausgebildet. Der Grundkörper 14 ist in Form eines Rohrs ausgestaltet. Der Grundkörper 14 besteht vorzugsweise aus Stahl. Das Schneidsystem 100 weist eine Vielzahl von Basiselementen 16, 18, 20 auf. Die Basiselemente 16, 18, 20 sind fest an dem Zerkleinerungsrotor 12 befestigt. Die Basiselemente 16, 18, 20 sind vorzugsweise mit dem Grundkörper 14 des Zerkleinerungsrotors 12 stoffschlüssig angebunden. Die Basiselemente 16, 18, 20 sind vorzugsweise mit dem Zerkleinerungsrotor 12 verschweißt.

Die Basiselemente 16, 18, 20 sind vorzugsweise über eine Schweißverbindung starr an einem Mantel des Zerkleinerungsrotors 12 angebunden.

An jedem Basiselement 16, 18, 20 des Schneidsystems 100 ist ein Schneidwerkzeug 10 angebunden. Über die Basiselemente 16, 18, 20 sind die Schneidwerkzeuge 10 jeweils fest an den Zerkleinerungsrotor 12 angebunden. Im Folgenden wird lediglich ein Schneidwerkzeug 10 und das entsprechende Basiselement 16 näher beschrieben. Die weiteren Schneidwerkzeuge 10 sind vorzugsweise identisch ausgebildet. Grundsätzlich wäre es aber auch denkbar, dass zumindest ein Teil der weiteren Schneidwerkzeuge 10 teilweise anders ausgebildet sind.

In Figur 2 ist eine isometrische Ansicht des Basiselements 16 mit dem daran befestigten Schneidwerkzeug 10 gezeigt. Das Schneidwerkzeug 10 weist eine Schneide 22 auf. Die Schneide 22 ist fest an dem Schneidwerkzeug 10 angebracht. Vorzugsweise ist die Schneide 22 stoffschlüssig an dem Schneidwerkzeug 10 angebunden. Die Schneide 22 ist in diesem Ausführungsbeispiel als eine Schneide aus einem gehärteten Metall ausgebildet. Die Schneide 22 ist als eine Hartmetallschneide ausgebildet. Das Schneidwerkzeug 10 weist einen Grundkörper 24 auf. Der Grundkörper 24 ist aus einem Metall gebildet. Der Grundkörper 24 ist vorzugsweise aus einem Schmiedeteil gebildet. Der Grundkörper 24 bildet eine Schneidaufnahme 26 aus. Die Schneide 22 ist in der Schneidaufnahme 26 des Grundkörpers 24 fest angebunden. Die Schneide 22 ist an der Schneidaufnahme 26 verliersicher befestigt. Die Schneide 22 ist vorzugsweise mittels einer Lötverbindung in der Schneidaufnahme 26 des Grundkörpers 24 stoffschlüssig angebunden. Grundsätzlich wäre es auch denkbar, dass die Schneide 22 auf eine andere Weise kraft-, form- und/oder stoffschlüssig an der Schneidaufnahme 26 verliersicher befestigt ist. Der Grundkörper 24 und die Schneide 22 bilden zusammen das Schneidwerkzeug 10 aus. Grundsätzlich wäre auch eine integrale Ausbildung der Schneide 22 und des Grundkörpers 24 des Schneidwerkzeugs 10 denkbar. Der Grundkörper 24 und die Schneide 22 wären zusammen aus einem einzelnen Werkstoff, insbesondere aus einem Rohling gebildet. Der Grundkörper 24 und die Schneide 22 wären dabei gemeinsam als ein Schmiedeteil ausgebildet. Grundsätzlich wäre es auch denkbar, dass der Grundkörper 24, oder der Grundkörper 24 zusammen mit der Schneide 22 als ein Fräßbauteil ausgebildet ist. Vorzugsweise ist es denkbar, dass ein Schmiedeteil, das den Grundkörper 24 und/oder die Schneide 22 ausbildet in einem Bearbeitungsschritt durch Fräsen nachbearbeitet wird.

Der Grundkörper 24 des Schneidwerkzeugs 10 weist eine Vorderseite 28 auf. Die Vorderseite 28 ist in einem montierten Zustand dem Basiselement 16 abgewandt. Der Grundkörper 24 des Schneidwerkzeugs 10 weist eine Rückseite 30 auf. Die Rückseite 30 des Schneidwerkzeugs 10 ist in einem montierten Zustand dem Basiselement 16 zugewandt. Der Grundkörper 24 des Schneidwerkzeugs 10 weist eine Oberseite 32 auf. Die Oberseite 32 des Schneidwerkzeugs 10 ist in einem montierten Zustand einer Unterseite des Basiselements 16, und insbesondere dem Zerkleinerungsrotor 12 abgewandt. Der Grundkörper 24 des Schneidwerkzeugs 10 weist eine Unterseite 34 auf. Die Unterseite 34 des Schneidwerkzeugs 10 ist in einem montierten Zustand einer Unterseite des Basiselements 16, und insbesondere dem Zerkleinerungsrotor 12 zugewandt. Die Schneide 22 des Schneidwerkzeugs 10 ist an der Vorderseite 28 angebracht. Die Schneide 22 ist in einem oberen Bereich, der an die Oberseite 32 angrenzt, an der Vorderseite 28 des Schneidwerkzeugs 10 angebracht. Die Schneide 22 kann über die Oberseite 32 des Grundkörpers 24 hinausstehen. Die Schneidaufnahme 26 ist in dem oberen Bereich der Vorderseite 28, der an die Oberseite 32 angrenzt, in den Grundkörper 24 eingebracht.

Das Schneidwerkzeug 10 weist einen Befestigungsbereich 36 auf. Über den Befestigungsbereich 36 ist das Schneidwerkzeug 10 an einem der Basiselemente 16, 18, 20 befestigbar. Der Befestigungsbereich 36 ist als eine Befestigungsvertiefung ausgebildet. Im Folgenden wird lediglich eine Anbindung des Schneidwerkzeugs 10 an das eine Basiselement 16 beschrieben, wobei eine Anbindung des Schneidwerkzeugs 10 an die anderen Basiselemente 18, 20 äquivalent erfolgt. Über den Befestigungsbereich 36 ist das Schneidwerkzeug 10 mit dem Basiselement 16 koppelbar. Über den Befestigungsbereich 36 stützt sich das Schneidwerkzeug 10 in einem montierten Zustand an dem Basiselement 16 ab. Das Schneidwerkzeug 10 ist über den Befestigungsbereich 36 zumindest in zwei Richtungen, vorzugsweise in drei oder vier Richtungen formschlüssig gekoppelt. Durch die formschlüssige Abstützung über den Befestigungsbereich 36 kann sich das Schneidwerkzeug 10 in zwei, vorzugsweise in drei oder vier Richtungen an dem Basiselement 16 abstützen.

Der Befestigungsbereich 36 ist auf der Rückseite 30 des Schneidwerkzeugs 10 angeordnet. Der Befestigungsbereich 36 ist in der Unterseite 34 des Schneidwerkzeugs 10 angeordnet. Der Befestigungsbereich 36 erstreckt sich teilweise in der Rückseite 30 und teilweise in der Unterseite 34 des Schneidwerkzeugs 10. Der Befestigungsbereich 36 erstreckt sich vorzugsweise von einem oberen Ende der Rückseite 30 bis an ein unteres Ende der Rückseite 30. Vorzugsweise ist der Befestigungsbereich 36 in einer Höhenachse, also von einem unteren Ende bis an ein oberes Ende der Rückseite 30 durchgehend ausgebildet. Grundsätzlich wäre es aber auch denkbar, dass der Befestigungsbereich 36 nicht durchgehend ausgebildet ist, beispielsweise nicht bis an die Oberseite 32, oder die Unterseite 34 reicht. Der Befestigungsbereich 36 erstreckt sich über zumindest einen Teil der Unterseite 34. Vorzugsweise erstreckt sich der Befestigungsbereich 36 von einem hinteren Ende der Unterseite 34 in Richtung einer Vorderseite 28 des Schneidwerkzeugs 10.

Der Befestigungsbereich 36 verläuft vorzugsweise mittig auf der Rückseite 30 des Schneidwerkzeugs 10. Der Befestigungsbereich 36 verläuft vorzugsweise ebenfalls auf der Unterseite 34 mittig. Der Befestigungsbereich 36 ist vorzugsweise in einer Querrichtung mittig in das Schneidwerkzeug 10 eingebracht. Der Befestigungsbereich 36 ist also insbesondere zwischen seitlichen Wandungen des Schneidwerkzeugs 10 mittig angeordnet. Der Befestigungsbereich 36 weist vorzugsweise eine Mittelebene 88 auf. Die Mittelebene 88 des Befestigungsbereichs 36 verläuft in Querrichtung mittig in dem Schneidwerkzeug 10. Vorzugsweise erstreckt sich der Befestigungsbereich 36 in einer Querrichtung im Wesentlichen über die gesamte Breite der Rückseite 30. Vorzugsweise erstreckt sich der Befestigungsbereich 36 in einer Querrichtung ebenfalls im Wesentlichen über die gesamte Breite der Unterseite 34. Grundsätzlich wäre es auch denkbar, dass sich der Befestigungsbereich 36 auf der Rückseite 30 und/oder der Unterseite 34 in Querrichtung nicht über eine gesamte Breite erstreckt. Dabei wäre denkbar, dass Seitenbereiche der Rückseite 30 und/oder der Unterseite 34 jeweils zumindest teilweise frei von dem Befestigungsbereich 36 wären.

Der Befestigungsbereich 36 ist länglich ausgebildet. Der Befestigungsbereich 36 des Schneidwerkzeugs 10 weist eine Längserstreckung auf. Die Längserstreckung des Befestigungsbereichs 36 verläuft in der Mittelebene 88 des Befestigungsbereichs 36 von einem oberen Ende des Befestigungsbereichs 36 in der Rückseite 30 bis an ein unteres Ende des Befestigungsbereichs 36 in der Unterseite 34. Der Befestigungsbereich 36 weist in seiner Längserstreckung zwei Teilbereiche 38, 40 auf. Die zwei Teilbereiche 38, 40 sind winklig zueinander ausgerichtet. Der Befestigungsbereich 36 ist entlang seiner Längserstreckung also winklig ausgebildet. Der Befestigungsbereich 36 weist in seiner Längserstreckung einen Knick auf. Die zwei Teilbereiche 38, 40 des Befestigungsbereichs 36 sind vorzugsweise in unterschiedlichen Seiten des Schneidwerkzeugs 10 angeordnet. Der erste Teilbereich 38 ist an der Rückseite 30 angeordnet. Der erste Teilbereich 38 ist von zumindest einem Teilbereich der Rückseite 30 des Schneidwerkzeugs 10 ausgebildet. Der an der Rückseite 30 des Schneidwerkzeugs 10 angeordnete Teil des Befestigungsbereichs 36 bildet den ersten Teilbereich 38 des Befestigungsbereichs 36 aus. Der zweite Teilbereich 40 ist an der Unterseite 34 angeordnet. Der zweite Teilbereich 40 ist zumindest von einem Teilbereich der Unterseite 34 des Schneidwerkzeugs 10 ausgebildet. Der an der Unterseite 34 des Schneidwerkzeugs 10 angeordnete Teil des Befestigungsbereichs 36 bildet den zweiten Teilbereich 40 des Befestigungsbereichs 36 aus. Der erste Teilbereich 38 des Befestigungsbereichs 36 ist als ein Hauptabstützbereich ausgebildet. Der erste Teilbereich 38 weist eine größere Erstreckung auf als der zweite Teilbereich 40 des Befestigungsbereichs 36. Über den ersten Teilbereich 38 werden vorzugsweise ein Großteil der Kräfte, die in einem Betrieb auftreten, an dem entsprechenden Basiselement 16 und damit dem Zerkleinerungsrotor 12 abgestützt.

Die winklig zueinander ausgerichteten Teilbereiche 38, 40 schließen einen Winkel A miteinander ein, der größer ist als 90 Grad. Bevorzugt schließen die zwei Teilbereiche 38, 40 des Befestigungsbereichs 36 einen Winkel A zwischen 95 Grad bis 120 Grad, vorzugsweise von 100 Grad bis 115 Grad miteinander ein. Vorzugsweise schließen die zwei Teilbereiche 38, 40 des Befestigungsbereichs 36 einen Winkel A von 110 Grad miteinander ein.

Das Schneidwerkzeug 10 weist ein Befestigungsloch 42 auf. Das Befestigungsloch 42 ist zur Anbindung des Schneidwerkzeugs 10 an das Basiselement 16 vorgesehen. Das Befestigungsloch 42 ist zur Aufnahme eines Befestigungsmittels 102 zur Anbindung des Schneidwerkzeugs 10 an das Basiselement 16 vorgesehen. Das Befestigungsloch 42 ist in die Rückseite 30 des Schneidwerkzeugs 10 in den Grundkörper 24 eingebracht. Das Befestigungsloch 42 erstreckt sich von der Rückseite 30 in den Grundkörper 24. Das Befestigungsloch 42 ist als ein Sackloch ausgebildet. Das Befestigungsloch 42 ist nicht bis zu der Vorderseite 28 durchgehend ausgebildet. Das Befestigungsloch 42 weist ein Innengewinde 44 auf. Über das Innengewinde 44 kann ein Befestigungsmittel 102, beispielsweise ein als Schraube ausgebildetes Befestigungsmittel 102, zur Befestigung des Schneidwerkzeugs 10 in das Befestigungsloch 42 geschraubt und somit fest angebunden werden. Das Befestigungsloch 42 ist vorzugsweise in einer unteren Hälfte der Rückseite 30 des Schneidwerkzeugs 10 angeordnet. Das Befestigungsloch 42 ist in dem Befestigungsbereich 36, insbesondere in einen ersten Teilbereich 38 des Befestigungsbereichs 36 eingebracht. Grundsätzlich wäre es auch denkbar, dass das Befestigungsloch 42 als ein Durchgangsloch ausgebildet wäre, das von der Rückseite 30 bis auf die Vorderseite 28 durchgängig ist. Grundsätzlich wäre es dabei ebenso denkbar, dass das Befestigungsloch 42 kein Innengewinde aufweist. Das als Durchgangsloch ausgebildete Befestigungsloch 42 wäre dabei lediglich dazu vorgesehen, dass ein Befestigungsmittel 102 zur Anbindung an das Basiselement 16 hindurchgeführt wird, wobei ein Schraubenkopf oder eine Mutter auf der Vorderseite 28 anliegen würde, um das Schneidwerkzeug 10 an das Basiselement 16 anzubinden. Das Befestigungsloch 42 weist eine Befestigungslochlängsachse 46 auf. Die Befestigungslochlängsachse 46 ist als eine Mittelachse des Befestigungslochs 42 ausgebildet. Das Befestigungsloch 42 erstreckt sich entlang der Befestigungslochlängsachse 46.

Der erste Teilbereich 38 des Befestigungsbereichs 36 schließt mit der Befestigungslochlängsachse 46 einen Winkel B ein. Der zweite Teilbereich 40 des Befestigungsbereichs 36 schließt mit der Befestigungslochlängsachse 46 einen Winkel C ein. Der Winkel B, den der erste Teilbereich 38 des Befestigungsbereichs 36 mit der Befestigungslochlängsachse 46 einschließt, unterscheidet sich von dem Winkel C, den der zweite Teilbereich 40 des Befestigungsbereichs 36 mit der Befestigungslochlängsachse 46 einschließt. Der erste Teilbereich 38 des Befestigungsbereichs 36 schließt mit der Befestigungslochlängsachse 46 einen Winkel B ein, der zwischen 65 Grad und 75 Grad liegt. Vorzugsweise beträgt der Winkel B, den der erste Teilbereich 38 des Befestigungsbereichs 36 mit der Befestigungslochlängsachse 46 einschließt, 70 Grad. Der zweite Teilbereich 40 des Befestigungsbereichs 36 schließt mit der Befestigungslochlängsachse 46 einen Winkel C ein, der zwischen 35 Grad und 45 Grad liegt. Vorzugsweise beträgt der Winkel C, den der zweite Teilbereich 40 des Befestigungsbereichs 36 mit der Befestigungslochlängsachse 46 einschließt, 40 Grad. Leichte Abweichungen von den genauen Winkelangaben der unterschiedlichen Winkel sind hier insbesondere aufgrund von Fertigungstoleranzen denkbar.

Das Schneidwerkzeug 10 weist eine Schneidbewegungsrichtung 104 auf. Die Schneidbewegungsrichtung 104 ist als eine Richtung ausgebildet, in die sich die Schneide 22 des Schneidwerkzeugs 10 während eines Betriebs bewegt. Der erste Teilbereich 38 schließt mit der Schneidbewegungsrichtung 104 einen Winkel D ein, der zwischen 79 Grad und 89 Grad liegt. Vorzugsweise beträgt der Winkel D, den die Schneidbewegungsrichtung 104 mit dem ersten Teilbereich 38 einschließt, 84 Grad. Der zweite Teilbereich 40 schließt mit der Schneidbewegungsrichtung 104 einen Winkel E ein, der zwischen 9 Grad und 19 Grad liegt. Vorzugsweise beträgt der Winkel E, den die Schneidbewegungsrichtung 104 mit dem zweiten Teilbereich 40 einschließt, 14 Grad.

Der Befestigungsbereich 36 ist zumindest teilweise als eine keilförmige Nut ausgebildet. Der Befestigungsbereich 36 ist in seinem ersten Teilbereich 38 zumindest teilweise als eine keilförmige Nut ausgebildet. Der Befestigungsbereich 36 weist in seinem ersten Teilbereich 38 zumindest einen Bereich auf, in dem der Befestigungsbereich 36 als eine keilförmige Nut ausgebildet ist. Vorzugsweise kann sich der Bereich, in dem der Befestigungsbereich 36 als eine keilförmige Nut ausgebildet ist, über den gesamten ersten Teilbereich 38 erstrecken. Grundsätzlich ist es aber auch denkbar, dass lediglich ein Teil, beispielsweise weniger als 50% des Befestigungsbereichs 36 in dem ersten Teilbereich 38 als eine keilförmige Nut ausgebildet ist. Vorzugsweise ist es ebenso denkbar, dass der Befestigungsbereich 36 in mehreren voneinander beabstandeten Bereichen in dem ersten Teilbereich 38 als eine keilförmige Nut ausgebildet ist. Der Befestigungsbereich 36 weist in dem ersten Teilbereich 38 zumindest in dem einen Bereich, in dem er als eine keilförmige Nut ausgebildet ist, zwei Seitenwandungen 48, 50 auf, die in einem Winkel F zueinander angeordnet sind. Die Seitenwandungen 48, 50 des Befestigungsbereichs 36 sind schräg zueinander ausgerichtet. Die Seitenwandungen 48, 50 erstrecken sich vorzugsweise über eine gesamte Längserstreckung des ersten Teilbereichs 38 des Befestigungsbereichs 36. Grundsätzlich sind auch mehrere voneinander beabstandet angeordnete Paare an Seitenwandungen 48, 50 denkbar, die den Befestigungsbereich 36 lediglich in Bereichen als eine keilförmige Nut ausbilden. In einem restlichen Bereich könnte der Befestigungsbereich 36 beliebig geformte Seitenwände haben, die beispielsweise einen anderen Winkel zueinander aufweisen. Die Seitenwandungen 48, 50 schließen einen Winkel F miteinander ein, der zwischen 130 Grad und 140 Grad liegt. Vorzugsweise schließen die Seitenwandungen 48, 50 einen Winkel F von 135 Grad miteinander ein.

Der Befestigungsbereich 36 weist in seinem zweiten Teilbereich 40 zumindest einen Bereich auf, in dem der Befestigungsbereich 36 als eine keilförmige Nut ausgebildet ist. Vorzugsweise kann sich der Bereich, in dem der Befestigungsbereich 36 als eine keilförmige Nut ausgebildet ist, über den gesamten zweiten Teilbereich 40 erstrecken. Grundsätzlich ist es aber auch denkbar, dass lediglich ein Teil, beispielsweise weniger als 50% des Befestigungsbereichs 36 in dem zweiten Teilbereich 40 als eine keilförmige Nut ausgebildet ist. Vorzugsweise ist es ebenso denkbar, dass der Befestigungsbereich 36 in mehreren voneinander beabstandeten Bereichen in dem zweiten Teilbereich 40 als eine keilförmige Nut ausgebildet ist. Der Befestigungsbereich 36 weist in dem zweiten Teilbereich 40 zumindest in dem einen Bereich, in dem er als eine keilförmige Nut ausgebildet ist, zwei Seitenwandungen 52, 54 auf, die in einem Winkel G zueinander angeordnet sind. Die Seitenwandungen 52, 54 des Befestigungsbereichs 36 sind schräg zueinander ausgerichtet. Die Seitenwandungen 52, 54 erstrecken sich vorzugsweise über eine gesamte Längserstreckung des zweiten Teilbereichs 40 des Befestigungsbereichs 36. Grundsätzlich sind auch mehrere voneinander beabstandet angeordnete Paare an Seitenwandungen 52, 54 denkbar, die den Befestigungsbereich 36 lediglich in Bereichen als eine keilförmige Nut ausbilden. In einem restlichen Bereich könnte der Befestigungsbereich 36 beliebig geformte Seitenwände haben, die beispielsweise einen anderen Winkel zueinander aufweisen. Die Seitenwandungen 48, 50, 52, 54 der keilförmigen Nuten in den beiden Teilbereichen 38, 40 weisen unterschiedliche Winkel F, G zueinander auf. Die Seitenwandungen 52, 54 des zweiten Teilbereichs 40 schließen einen unterschiedlichen Winkel G miteinander ein als die Seitenwandungen 48, 50 des ersten Teilbereichs 38. Die Seitenwandungen 52, 54 schließen einen Winkel G miteinander ein, der zwischen 162 Grad und 172 Grad liegt. Vorzugsweise schließen die Seitenwandungen 52, 54 einen Winkel G von 167 Grad miteinander ein.

Das Basiselement 16 ist zu einer starren Anbindung an den Zerkleinerungsrotor 12 vorgesehen. Das Basiselement 16 ist vorzugsweise mittels einer Schweißverbindung fest und starr mit dem Grundkörper 14 des Zerkleinerungsrotors 12 verschweißt. Das Basiselement 16 ist vorzugsweise als ein längliches Element ausgebildet. Das Basiselement 16 weist eine Unterseite 56 auf. Die Unterseite 56 ist dem Zerkleinerungsrotor 12 zugewandt. Mit seiner Unterseite 56 ist das Basiselement 16 dem Grundkörper 14 des Zerkleinerungsrotors 12 zugewandt angeschweißt. Vorzugsweise weist die Unterseite 56 des Basiselements 16 dazu eine zu einer Außenkontur des Grundkörpers 14 korrespondierende Form auf. Das Basiselement 16 weist eine Oberseite 58 auf, die dem Zerkleinerungsrotor 12 abgewandt ist. Das Basiselement 16 weist eine Rückseite 60 auf. Die Rückseite 60 des Basiselements 16 zeigt einer Arbeitsrotationsrichtung des Zerkleinerungsrotors 12 entgegen. Die Rückseite 60 des Basiselements 16 ist also entgegen der Schneidbewegungsrichtung 104 ausgerichtet. Das Basiselement 16 weist eine Vorderseite 62 auf. Die Vorderseite 62 des Basiselements 16 zeigt in eine Arbeitsrotationsrichtung des Zerkleinerungsrotors 12. Das Basiselement 16 ist vorzugsweise aus einem Metall gebildet. Das Basiselement 16 ist vorzugsweise als ein Schmiedeteil ausgebildet.

Das Basiselement 16 weist an seiner Vorderseite 62 einen Anlagebereich 64 auf. Der Anlagebereich 64 ist dazu vorgesehen, dass das Schneidwerkzeug 10 mit seinem Befestigungsbereich 36 zumindest teilweise formschlüssig anliegt. Der Anlagebereich 64 ist zur formschlüssigen Anbindung des Schneidwerkzeugs 10 vorgesehen. Über den Anlagebereich 64 ist das Schneidwerkzeug 10 in einem montierten Zustand an das Basiselement 16 und damit den Zerkleinerungsrotor 12 angebunden. Der Anlagebereich 64 ist korrespondierend zu dem Befestigungsbereich 36 des Schneidwerkzeugs 10 ausgebildet.

Das Basiselement 16 weist ein Befestigungsloch 66 auf. Das Befestigungsloch 66 weist eine Befestigungslochlängsachse 74 auf. Die Befestigungslochlängsachse 74 des Befestigungslochs 66 ist in einem montierten Zustand koaxial zu der Befestigungslochlängsachse 46 des Befestigungslochs 42 des Schneidwerkzeugs 10 ausgerichtet. Das Befestigungsloch 66 ist zur Fixierung des Schneidwerkzeugs 10 in dem Anlagebereich 64 vorgesehen. Das Befestigungsloch 66 ist zur Durchführung eines Befestigungsmittels 102 vorgesehen. Das Befestigungsloch 66 ist als ein Durchgangsloch ausgebildet. Das Befestigungsloch 66 erstreckt sich von der Vorderseite 62 bis zu der Rückseite 60 des Basiselements 16. Das Befestigungsloch 66 ist in einem Bereich des Anlagebereichs 64 angeordnet. Das Befestigungsloch 66 ist als ein einfaches Durchgangsloch ausgebildet, das insbesondere kein Innengewinde aufweist. Das Basiselement 16 weist an seiner Rückseite 60 im Bereich des Befestigungslochs 66 eine Abstützfläche 68 auf. An der Abstützfläche 68 kann sich ein als Schraube ausgebildetes Befestigungsmittel 102 zur Befestigung des Schneidwerkzeugs 10 mit seinem Schraubenkopf abstützen. Grundsätzlich wäre es auch denkbar, dass das Befestigungsloch 66 des Basiselements 16 als ein Sackloch mit einem Innengewinde ausgebildet ist und das Befestigungsloch 42 des Schneidwerkzeugs 10 als ein Durchgangsloch. Zur Befestigung des Schneidwerkzeugs 10 an dem Basiselement 16 würde ein als Schraube ausgebildetes Befestigungsmittel 102 von der Vorderseite 28 des Schneidwerkzeugs 10 durch das als Durchgangloch ausgebildete Befestigungsloch 42 des Schneidwerkzeugs 10 geführt und in dem Befestigungsloch 66 des Basiselements 16, das in diesem Falle ein Innengewinde aufweist, verschraubt werden.

Der Anlagebereich 64 des Basiselements 16 ist im Wesentlichen L-förmig ausgebildet. Der Anlagebereich 64 weist einen ersten Teilbereich 70 auf. Der erste Teilbereich 70 des Anlagebereichs 64 des Basiselements 16 ist korrespondierend zu dem ersten Teilbereich 38 des Befestigungsbereichs 36 des Schneidwerkzeugs 10 ausgebildet. Der Anlagebereich 64 weist einen zweiten Teilbereich 72 auf. Der zweite Teilbereich 72 des Anlagebereichs 64 des Basiselements 16 ist korrespondierend zu dem zweiten Teilbereich 40 des Befestigungsbereichs 36 des Schneidwerkzeugs 10 ausgebildet. Die zwei Teilbereiche 70, 72 sind winklig zueinander angeordnet. Die Teilbereiche 70, 72 schließen einen Winkel J ein, der dem Winkel A der Teilbereiche 38, 40 des Befestigungsbereichs 36 entspricht. Der erste Teilbereich 70 des Anlagebereichs 64 schließt einen Winkel K mit der Befestigungslochlängsachse 74 des Befestigungslochs 66 des Basiselements 16 ein. Der Winkel K beträgt vorzugsweise zwischen 65 Grad und 75 Grad, insbesondere 70 Grad. Der Winkel K, den der erste Teilbereich 70 des Anlagebereichs 64 des Basiselements 16 mit der Befestigungslochlängsachse 74 des Befestigungslochs 66 einschließt, entspricht dem Winkel B, den der erste Teilbereich 38 des Befestigungsbereichs 36 des Schneidwerkzeugs 10 mit der Befestigungslochlängsachse 46 einschließt. Der zweite Teilbereich 72 des Anlagebereichs 64 schließt einen Winkel L mit der Befestigungslochlängsachse 74 des Befestigungslochs 66 des Basiselements 16 ein. Der Winkel L beträgt vorzugsweise zwischen 35 Grad und 45 Grad, insbesondere 40 Grad. Der Winkel L, den der zweite Teilbereich 72 des Anlagebereichs 64 des Basiselements 16 mit der Befestigungslochlängsachse 74 des Befestigungslochs 66 einschließt, entspricht dem Winkel C, den der zweite Teilbereich 40 des Befestigungsbereichs 36 des Schneidwerkzeugs 10 mit der Befestigungslochlängsachse 46 einschließt.

Der Anlagebereich 64 ist von wenigstens einer keilförmigen Erhebung gebildet, die korrespondierend zu dem als keilförmige Nut ausgebildeten Befestigungsbereich 36 ausgebildet ist. Der erste Teilbereich 70 des Anlagebereichs 64 ist nach vorne, von der Rückseite 60 des Basiselements 16 weg gerichtet. Der erste Teilbereich 70 des Anlagebereichs 64 ist von einer keilförmigen Erhebung gebildet. Der erste Teilbereich 70 weist eine erste Seitenfläche 76 und eine zweite Seitenfläche 78 auf, die winklig zueinander ausgerichtet sind. Die Seitenflächen 76, 78 des ersten Teilbereichs 70 sind voneinander weg gerichtet. Die zwei Seitenflächen 76, 78 sind jeweils seitlich nach außen gerichtet. Die zwei Seitenflächen 76, 78 schließen einen Winkel H miteinander ein. Die zwei Seitenflächen 76, 78 schließen einen Winkel H miteinander ein, der zwischen 130 Grad und 140 Grad liegt. Der Winkel H, den die Seitenflächen 76, 78 miteinander einschließen, beträgt vorzugsweise 135,5 Grad. Der Winkel H, den die beiden Seitenflächen 76, 78 des ersten Teilbereichs 70 des Anlagebereichs 64 miteinander einschließen, ist korrespondierend zu dem Winkel F ausgebildet, den die Seitenwandungen 48, 50 in dem ersten Teilbereich 38 des Befestigungsbereichs 36 miteinander einschließen. Zwischen den beiden Seitenflächen 76, 78 weist die keilförmige Erhebung einen Steg 80 auf. Der Steg 80 ist vorzugsweise zwischen 2 mm und 8 mm breit, vorzugsweise ca. 5 mm.

Der zweite Teilbereich 72 des Anlagebereichs 64 ist nach oben, von der Unterseite 56 des Basiselements 16 weg gerichtet. Der zweite Teilbereich 72 des Anlagebereichs 64 ist an einem unteren Ende des ersten Teilbereichs 70 angeordnet. Der zweite Teilbereich 72 des Anlagebereichs 64 ist entgegen der Schneidbewegungsrichtung 104 betrachtet vor dem ersten Teilbereich 70 angeordnet. Der zweite Teilbereich 72 des Anlagebereichs 64 ist von einer keilförmigen Erhebung gebildet. Der zweite Teilbereich 72 weist eine erste Seitenfläche 82 und eine zweite Seitenfläche 84 auf, die winklig zueinander ausgerichtet sind. Die Seitenflächen 82, 84 des zweiten Teilbereichs 72 sind voneinander weg gerichtet. Die zwei Seitenflächen 82, 84 sind jeweils seitlich nach außen gerichtet. Die zwei Seitenflächen 82, 84 schließen einen Winkel I miteinander ein. Die zwei Seitenflächen 82, 84 schließen einen Winkel I miteinander ein, der zwischen 162 Grad und 172 Grad liegt. Der Winkel I, den die Seitenflächen 82, 84 miteinander einschließen, beträgt vorzugsweise 168 Grad. Der Winkel I, den die beiden Seitenflächen 82, 84 des zweiten Teilbereichs 72 des Anlagebereichs 64 miteinander einschließen, ist vorzugsweise zwischen 0,1 Grad und 3,5 Grad größer als der Winkel G ausgebildet, den die Seitenwandungen 52, 54 in dem zweiten Teilbereich 40 des Befestigungsbereichs 36 miteinander einschließen. Der Winkel I, den die beiden Seitenflächen 82, 84 des zweiten Teilbereichs 72 des Anlagebereichs 64 miteinander einschließen, ist vorzugsweise zwischen 0,5 Grad größer als der Winkel G ausgebildet, den die Seitenwandungen 52, 54 die die keilförmigen Nut in dem zweiten Teilbereich 40 des Befestigungsbereichs 36 miteinander einschließen. Dadurch verspannen sich bei einer Montage die Seitenwandungen 52, 54, die die keilförmigen Nut in dem zweiten Teilbereich 40 des Befestigungsbereichs 36 ausbilden, mit den Seitenflächen 82, 84 des zweiten Teilbereichs 72 des Anlagebereichs 64. Dadurch kann das Schneidwerkzeug 10 besonders sicher an dem Basiselement 16 montiert werden. Durch Anziehen des als Schraube ausgebildeten Befestigungsmittels 102 verspannt sich der zweite Teilbereich 40 des Befestigungsbereichs 36 mit dem zweiten Teilbereich 72 des Anlagebereichs 64. Zwischen den beiden Seitenflächen 82, 84 weist die keilförmige Erhebung einen Steg 86 auf. Der Steg 86 ist vorzugsweise zwischen 2 mm und 8 mm breit.

Der zweite Teilbereich 72 des Anlagebereichs 64 weist vorzugsweise eine Erstreckung auf, die kleiner ist als eine Dicke des Schneidwerkzeugs 10, insbesondere als eine Dicke des Schneidwerkzeugs 10 an seinem unteren Ende. Das Schneidwerkzeug 10 steht dadurch in einem an dem Basiselement 16 montierten Zustand mit seiner Unterseite 34 über den zweiten Teilbereich 72 des Anlagebereichs 64 des Basiselement 16 über. Durch das Überstehen kann ein Verschleißschutz für das Basiselement 16 bereitgestellt werden, das insbesondere im Gegensatz zu dem Schneidwerkzeug 10 nicht leicht austauschbar ist.

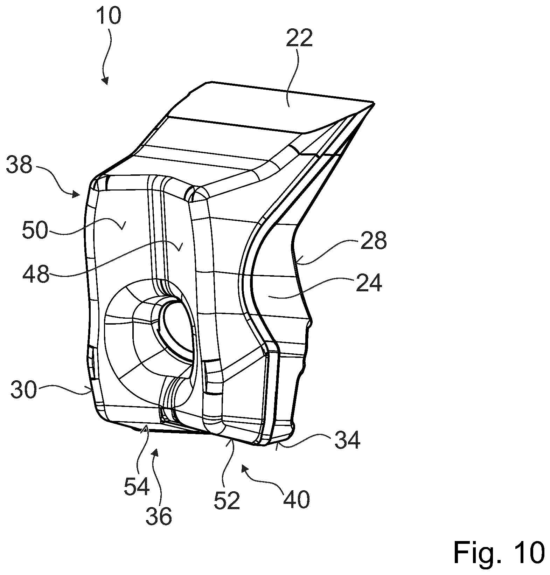

In der Figur 10 ist ein zweites Ausführungsbeispiel eines erfindungsgemäßen Schneidwerkzeugs 10 gezeigt. Das Schneidwerkzeug 10 weist im Unterschied zu dem ersten Ausführungsbeispiel eine integral mit dem Grundkörper 24 des Schneidwerkzeugs 10 ausgebildete Schneide 22 auf. Die Schneide 22 ist zusammen mit dem Grundkörper 24 gemeinsam ausgebildet. Das Schneidwerkzeug 10 bildet die Schneide 22 und den Grundkörper 24 zusammen als ein Schmiedewerkzeug aus. Der Befestigungsbereich 36 ist identisch ausgebildet wie zuvor zu dem Schneidwerkzeug 10 im ersten

Ausführungsbeispiel beschrieben. Deshalb soll hier nicht näher darauf eingegangen werden. Grundsätzlich wäre es auch denkbar, dass das Schneidwerkzeug 10 in einem weiteren Ausführungsbeispiel eine andere Ausgestaltung der Schneide aufweist. Grundsätzlich wäre auch denkbar, dass das Schneidwerkzeug 10 zwei oder mehr als zwei Schneiden aufweist. Die Anzahl und Ausgestaltung der Schneiden ist unabhängig von einer Ausgestaltung des Befestigungsbereichs 36 und wie das Schneidwerkzeug 10 an ein Basiselement 16, 18, 20 angebunden wird.

### Bezugszeichen

- 10: Schneidwerkzeug
- 12: Zerkleinerungsrotor
- 14: Grundkörper
- 16: Basiselement
- 18: Basiselement
- 20: Basiselement
- 22: Schneide
- 24: Grundkörper
- 26: Schneidaufnahme
- 28: Vorderseite
- 30: Rückseite
- 32: Oberseite
- 34: Unterseite
- 36: Befestigungsbereich
- 38: erster Teilbereich
- 40: zweiter Teilbereich
- 42: Befestigungsloch
- 44: Innengewinde
- 46: Befestigungslochlängsachse
- 48: Seitenwandung
- 50: Seitenwandung
- 52: Seitenwandung
- 54: Seitenwandung
- 56: Unterseite
- 58: Oberseite
- 60: Rückseite
- 62: Vorderseite
- 64: Anlagebereich
- 66: Befestigungsloch
- 68: Abstützfläche
- 70: Teilbereich
- 72: Teilbereich
- 74: Befestigungslochlängsachse
- 76: Seitenfläche
- 78: Seitenfläche
- 80: Steg
- 82: Seitenfläche
- 84: Seitenfläche
- 86: Steg
- 88: Mittelebene

- 100: Schneidsystem
- 102: Befestigungsmittel
- 104: Schneidbewegungsrichtung

- A: Winkel Teilbereiche
- B: Winkel erster TB/BLA
- C: Winkel zweiter TB/BLA
- D: Winkel erster Teilbereich/SR
- E: Winkel zweiter TB/SR
- F: Winkel Nut erster TB
- G: Winkel Nut zweiter TB
- H: Winkel Erhebung erster TB
- I: Winkel Erhebung zweiter TB
- J: Winkel Teilbereiche Basis
- K: Winkel erster TB/BLA
- L: Winkel zweiter TB/BLA

## Patentansprüche

1. Schneidwerkzeug für einen Zerkleinerungsrotor (12), insbesondere zur Holz- und/oder Erdreichzerkleinerung, mit wenigstens einer Schneide (22), und wenigstens einem Befestigungsbereich (36), der vorzugsweise zumindest teilweise als eine Befestigungsvertiefung ausgebildet ist, der in einer Längserstreckung zwei Teilbereiche (38, 40) aufweist, die winklig zueinander ausgerichtet sind, **dadurch gekennzeichnet, dass** die Teilbereiche (38, 40) einen Winkel (A) einschließen, der größer ist als 90 Grad.

2. Schneidwerkzeug nach Anspruch 1, **dadurch gekennzeichnet, dass** die Teilbereiche (38, 40) einen Winkel von 95 Grad bis 120 Grad, vorzugsweise von 100 Grad bis 115 Grad miteinander einschließen.

3. Schneidwerkzeug nach Anspruch 1 oder 2, **gekennzeichnet durch** eine Befestigungslochlängsachse (46), wobei der erste Teilbereich (38) einen Winkel (B) mit der Befestigungslochlängsachse (46) einschließt, der sich von einem Winkel (C) unterscheidet, den die Befestigungslochlängsachse (46) mit dem zweiten Teilbereich (40) einschließt.

4. Schneidwerkzeug nach einem der vorhergehenden Ansprüche, **gekennzeichnet durch** eine Befestigungslochlängsachse (46), wobei ein erster Teilbereich (38) des Befestigungsbereichs (36) einen Winkel (B) mit der Befestigungslochlängsachse (46) einschließt, der zwischen 65 Grad und 75 Grad liegt.

5. Schneidwerkzeug nach einem der vorhergehenden Ansprüche, **gekennzeichnet durch** eine Befestigungslochlängsachse (46), wobei der zweite Teilbereich (40) des Befestigungsbereichs (36) einen Winkel (C) mit der Befestigungslochlängsachse (46) einschließt, der zwischen 35 Grad und 45 Grad liegt.

6. Schneidwerkzeug nach einem der vorhergehenden Ansprüche, **dadurch gekennzeichnet, dass** der erste Teilbereich (38) als ein Hauptabstützbereich ausgebildet ist, der eine größere Erstreckung aufweist als der zweite Teilbereich (40).

7. Schneidwerkzeug nach einem der vorhergehenden Ansprüche, **dadurch gekennzeichnet, dass** der erste Teilbereich (38) von zumindest einem Teilbereich einer Rückseite (30) des Schneidwerkzeugs (10) ausgebildet ist.

8. Schneidwerkzeug nach einem der vorhergehenden Ansprüche, **dadurch gekennzeichnet, dass** der zweite Teilbereich (40) zumindest von einem Teilbereich einer Unterseite (34) des Schneidwerkzeugs (10) ausgebildet ist.

9. Schneidwerkzeug nach einem der vorhergehenden Ansprüche, **gekennzeichnet durch** eine Schneidbewegungsrichtung (104), wobei ein erster Teilbereich (38) des Befestigungsbereichs (36) einen Winkel D mit der Schneidbewegungsrichtung (104) einschließt, der zwischen 79 Grad und 89 Grad liegt.

10. Schneidwerkzeug nach einem der vorhergehenden Ansprüche, **gekennzeichnet durch** eine Schneidbewegungsrichtung (104), wobei der zweite Teilbereich (40) des Befestigungsbereichs (36) einen Winkel E mit der Schneidbewegungsrichtung (104) einschließt, der zwischen 9 Grad und 19 Grad liegt.

11. Schneidwerkzeug nach einem der vorhergehenden Ansprüche, **dadurch gekennzeichnet, dass** der Befestigungsbereich (36) zumindest teilweise als eine keilförmige Nut ausgebildet ist, die Seitenwandungen (48, 50, 52, 54) aufweist, die in einem Winkel (F, G) zueinander angeordnet sind, der in einem Bereich von 130 Grad bis 172 Grad liegt.

12. Schneidwerkzeug nach einem der vorhergehenden Ansprüche, **dadurch gekennzeichnet, dass** der Befestigungsbereich (36) in seinen zwei Teilbereichen (38, 40) jeweils zumindest teilweise als eine keilförmige Nut ausgebildet ist, wobei Seitenwandungen (48, 50, 52, 54) der keilförmigen Nuten in den beiden Teilbereichen (38, 40) unterschiedliche Winkel (F, G) zueinander aufweisen.

13. Schneidwerkzeug nach einem der vorhergehenden Ansprüche, **gekennzeichnet durch** ein Befestigungsloch (66), das sich von einer Rückseite (30) in das Schneidwerkzeug (10) erstreckt und das zur Befestigung eines Befestigungsmittels (102) vorgesehen ist.

14. Schneidsystem (100) mit einem Schneidwerkzeug (10) nach einem der vorhergehenden Ansprüche, **gekennzeichnet durch** ein Basiselement (16, 18, 20), das zur starren Anbindung an den Zerkleinerungsrotor (12) vorgesehen ist, und das an einer Vorderseite (62) einen Anlagebereich (64) aufweist, der dazu vorgesehen ist, dass das Schneidwerkzeug (10) mit seinem Befestigungsbereich (36) zumindest teilweise formschlüssig anliegt.

15. Schneidsystem nach Anspruch 14, **dadurch gekennzeichnet, dass** der Anlagebereich (64) einen ersten Teilbereich (70) aufweist, der korrespondierend zu dem ersten Teilbereich (38) des Schneidwerkzeugs (10) ausgebildet ist, und einen zweiten Teilbereich (72), der korrespondierend zu dem zweiten Teilbereich (40) des Schneidwerkzeugs (10) ausgebildet ist, aufweist.

16. Schneidsystem nach Anspruch 15, **dadurch gekennzeichnet, dass** der Anlagebereich (64) einen zweiten Teilbereich (72) aufweist, der zumindest teilweise eine keilförmige Erhebung ausbildet, wobei Seitenflächen (82, 84) der keilförmigen Erhebungen einen Winkel I aufweisen, der minimal größer, vorzugsweise zwischen 0,1 Grad und 3,5 Grad größer, ist als der Winkel C des zweiten Teilbereichs (40) des Befestigungsbereichs (36) des Schneidwerkzeugs (10).

17. Schneidsystem nach einem der vorhergehenden Ansprüche, **dadurch gekennzeichnet, dass** der zweite Teilbereich (72) des Anlagebereichs (64) eine Erstreckung aufweist, die kleiner ist als eine Dicke des Schneidwerkzeugs (10).

18. Schneidsystem nach einem der Ansprüche 13 - 17, **dadurch gekennzeichnet, dass** das Schneidwerkzeug (10) in einem an dem Basiselement (16, 18, 20) montierten Zustand, mit seiner Unterseite (34) über den zweiten Teilbereich (72) des Anlagebereichs (64) des Basiselements (16, 18, 20) übersteht.

19. Schneidsystem nach einem der Ansprüche 13 - 18, **dadurch gekennzeichnet, dass** das Basiselement (16, 18, 20) das Schneidwerkzeug (10) nicht umgreift.
